# EUROPÄISCHE PATENTSCHRIFT

(11) **EP 0 973 596 B1**
(45) Veröffentlichungstag und Bekanntmachung des Hinweises auf die Patenterteilung: **10.10.2001**
(21) Anmeldenummer: 97948843.4
(22) Anmeldetag: 30.10.1997
(51) Int. Cl.: B01D 33/23, B01D 33/39, B01D 29/39, B01D 39/20

(54) **FILTERVORRICHTUNG MIT FILTERSCHEIBEN**
FILTER DEVICE WITH FILTER DISKS
DISPOSITIF DE FILTRATION A DISQUES FILTRANTS

(30) Priorität: 07.04.1997 DE 19714187
(43) Veröffentlichungstag der Anmeldung: 26.01.2000
(73) Patentinhaber: Hydac Process Technology GmbH, 66538 Neunkirchen (DE)
(72) Erfinder: HAUSDORF, Jürgen, D-66130 Saarbrücken (DE); LANG, Norbert, D-66440 Blieskastel (DE); TECKENTRUP, Heinrich, D-66123 Saarbrücken (DE)
(74) Vertreter: Patentanwälte Bartels und Partner
(86) Internationale Anmeldenummer: EP9706007
(87) Internationale Veröffentlichungsnummer: WO9845022

(56) Entgegenhaltungen:
- EP-A- 0 655 268
- DE-A- 4 427 849
- DE-B- 1 096 331
- US-A- 4 902 420

## Beschreibung

Die Erfindung betrifft eine Filtervorrichtung, insbesondere zum Filtrieren von schmelzartigen Fluiden, wie Polymerschmelzen, mit mindestens einer Filterscheibe, die zwei randseitig miteinander verbundene Filterscheibenhälften aufweist, die nach außen hin mit einem Filtergewebematerial versehen sind, die über eine Stützeinrichtung auf Abstand voneinander gehalten sind und die zwischen sich einen im wesentlichen frei durchströmbaren Hohlraum und nach innen hin eine Auslaßöffnung für das schmelzartige Fluid begrenzen.

Durch die US-A-4,902,420 ist eine dahingehende Filtervorrichtung bekannt mit einem Mehrschichtaufbau, wobei zwischen den einander gegenüberliegenden Filtergewebematerialien als Stützeinrichtung eine Drainageplatte eingesetzt ist mit von außen nach innen verlaufenden, durchgehenden Längsschlitzen, die einen im Volumen verminderten Hohlraum zwischen den Filtergewebematerialien begrenzen. Der Durchflußwiderstand für das zu filternde Medium, beispielsweise in Form der Polymerschmelze, ist bei dieser bekannten Lösung erhöht, so daß die Filtrierleistung entsprechend herabgesetzt ist. Aufgrund des komplizierten Aufbaues und der Teilevielfalt sind darüber hinaus die Herstellkosten erhöht. Ferner werden durch die Trennung der Fluidströme in der Filterscheibe durch die Abtrennung in Längsschlitze sog. Memory-Effekte bewirkt, die beim beispielsweise späteren Folienblasen aus der Polymerschmelze zu unerwünschten Streifenbildungen führen.

Durch die DE-A- 1,096,331 ist eine Filtervorrichtung mit mindestens einer Filterscheibe, bestehend aus zwei miteinander verbundenen Filterscheibenhälften, bekannt, die zwischen sich einen im wesentlichen frei durchströmbaren Hohlraum begrenzen und die nach außen hin mit einem Filtergewebematerial versehen ist, wobei die jeweilige Filterscheibenhälfte aus einer Lochblechscheibe besteht oder aus speichenartigen Stegen aufgebaut ist. Als Stützeinrichtung sind bei dieser bekannten Lösung in sich gewundene Rippen oder Stege eingesetzt, die sich radial nach innen und in Abstand voneinander über den gesamten Hohlraum erstrecken, der sich zum Außenumfang hin konisch verjüngt. Diese bekannte Lösung erlaubt nur eine unzureichende Abstützung für die Filterscheibenhälften mit ihrem Filtergewebematerial, so daß die bekannte Lösung sich nur beschränkt einsetzen läßt und insbesondere bei hohen Drücken versagensfrei nicht eingesetzt werden kann. Im übrigen separieren die Rippen bei der bekannten Lösung einzelne Kammern des vorzugsweise frei zu durchströmenden Hohlraumes, so daß auch hier der Durchflußwiderstand erhöht ist, so daß die bekannte Lösung zum Filtrieren von schmelzartigen Fluiden nicht geeignet ist.

Ausgehend von diesem Stand der Technik liegt der Erfindung die Aufgabe zugrunde, die vorstehend beschriebenen Filtervorrichtungen dahingehend zu verbessern, daß eine Filtervorrichtung geschaffen ist, die kostengünstig herstellbar ist und die eine erhöhte Filtrierleistung im Betrieb erlaubt, wobei insbesondere an deren Einsatz zum Filtrieren von schmelzartigen Fluiden, wie Polymerschmelzen, unter hohen Drücken gedacht ist. Eine dahingehende Aufgabe löst eine Filtervorrichtung mit den Merkmalen des Anspruches 1.

Dadurch, daß gemäß dem kennzeichnenden Teil des Anspruches 1 die Stützeinrichtung einzelne Stütznocken mit im wesentlichen gleichen Außenabmessungen aufweist, die in mehreren Gruppen geordnet und voneinander getrennt sich radial von der Auslaßöffnung nach außen hin erstrecken, und die mit mindestens einer der beiden Filterscheibenhälften fest verbunden sind und den Hohlraum derart durchgreifen, daß sie in Anlage mit der jeweils anderen Filterscheibenhälfte sind, ist der gesamte, zur Verfügung stehende Hohlraum ohne Separierung im wesentlichen frei durchströmbar, wobei auf die vorstehend beschriebenen Drainageplatten in kostengünstiger Weise verzichtet werden kann. Mithin ist die Durchflußmenge des zu filtrierenden schmelzartigen Fluides, wie Polymerschmelzen, erhöht und mithin die Filtrierleistung.

Durch die Vielzahl der in Gruppen angeordneten Stütznocken, die sich zwischen den beiden Filterscheibenhälften einer Filterscheibe erstrecken und diese abstützen, ist ein hoher Widerstand gegen Druckspannungen auf die Filterscheibenhälften sowie ihre Filtergewebematerialien erreicht, so daß insgesamt eine in hohem Maße druckstabile Filterscheibe für die Filtervorrichtung realisiert ist. Gleichzeitig bewirken die versetzt angeordneten Stütznocken eine Vermischung des Schmelzflusses, der dem Memory-Effekt entgegenwirkt.
Bei einer bevorzugten Ausführungsform der erfindungsgemäßen Filtervorrichtung gruppieren sich die einzelnen Gruppen von Stütznocken in verschiedenen radialen Abständen von der Auslaßöffnung entlang von konzentrischen Kreisen um diese Auslaßöffnung. Es hat sich gezeigt, daß die dahingehende Anordnung ein hohes Maß an Abstützung für die Filterscheibenhälften erlaubt und dennoch den frei zu durchströmenden Hohlraum zwischen den Filterscheibenhälften im Sinne einer Erhöhung des Durchflußwiderstandes nur wenig beeinträchtigt. Auch läßt sich derart eine günstige Herstellung für die jeweilige Filterscheibe und mithin für die Filtervorrichtung erreichen.

Bei einer weiteren bevorzugten Ausführungsform der erfindungsgemäßen Filtervorrichtung sind beide Filterscheibenhälften einer Filterscheibe auf ihren einander zugewandten Seiten jeweils mit Stütznocken gleicher Höhe versehen, die entweder entlang einer Längstrennlinie der Filterscheibenhälften aneinanderstoßen und/oder unter Anlage mit der jeweils anderen Filterscheibenhälfte in die freien Abstände zwischen den Stütznocken dieser Filterscheibenhälfte eingreifen. Bei den dahingehend beschriebenen Anordnungen kann aus Kostenersparnisgründen die jeweilige Filterscheibe aus gleich aufgebauten Filterscheibenhälften zusammengesetzt werden.

Die Herstellkosten lassen sich weiter senken, sofern die Stütznocken über mittels eines Buckel-Schweißverfahrens hergestellte Schweißpunkte mit der jeweiligen Filterscheibenhälfte fest verbunden sind.

Bei einer weiteren bevorzugten Ausführungsform der erfindungsgemäßen Filtervorrichtung verlaufen die beiden Filterscheibenhälften parallel zueinander und begrenzen einen scheibenartigen Hohlraum gleicher Höhe. Es hat sich gezeigt, daß hierdurch eine günstige Durchströmung des schmelzartigen Fluides erreicht ist, ohne daß es zu den Durchflußwiderstand erhöhenden Wandschubspannungen beim Durchströmen der Filterscheibe kommt.

Bei einer besonders bevorzugten Ausführungsform der erfindungsgemäßen Filtervorrichtung bilden die Stütznocken stegartige massive Kastenprofile aus, die auf die jeweilige Filterscheibenhälfte derart aufsetzbar sind, daß sie die Durchlässe in der Filterscheibenhälfte freilassen. Durch den Einsatz der massiven Kastenprofile können sich die Filtergewebematerialien auf den Außenseiten der beiden Filterscheibenhälften einer Filterscheibe sicher abstützen und werden nicht in das Kastenprofil der Stütznocken eingezogen, was beispielsweise der Fall wäre, wenn diese durch ein Tiefziehverfahren od.dgl. aus der jeweiligen Filterscheibenhälfte ausgeprägt wären. Da die Kastenprofile stegartig ausgeführt sind, lassen sie sich gut in die Zwischenräume zwischen den Durchlässen einer Filterscheibenhälfte einsetzen, so daß sie die freie Durchströmung über diese Durchlässe nicht beeinträchtigen können. Insbesondere lassen sich durch die Anordnung Strömungsschatten vermeiden, da die Durchlässe ohne seitlichen Abstand unmittelbar um die Stütznocken gruppiert und freigelassen sind.

Bei einer weiteren besonders bevorzugten Ausführungsform der erfindungsgemäßen Filtervorrichtung sind die jeweiligen Durchlässe in den Filterscheibenhälften aus kreisrunden Ausnehmungen gebildet, die in Gruppen unterschiedlicher Häufigkeit sich entlang von konzentrischen Kreisen um die Auslaßöffnung erstrecken. Durch eine geschickte Wahl der Gruppierung mit Durchlässen an Lochreihen lassen sich wiederum die Strömungsverhältnisse innerhalb der Filterscheibe für das schmelzartige Fluid verbessern und somit die Filtrierleistung erhöhen. Vorzugsweise sind die Filterscheibenhälften und die Stütznocken aus Edelstahl gebildet, so daß diese nicht korrodieren und mithin auch das schmelzartige Fluid nicht verunreinigen können. Sofern vorzugsweise auf der Oberseite und Unterseite der Filterscheibe Abstandsnocken angeordnet sind, insbesondere im außenumfangsseitigen Randbereich, wo die Filterscheibenhälften über eine Randschweißnaht miteinander verbunden sind, können so auf kostengünstige Art und Weise sogenannte Spacer entfallen, die bei den bekannten Filtervorrichtungen dazu dienen, im Paket die jeweiligen Filterscheiben auf Abstand voneinander zu halten. Der dahingehende Abstand wird dann über die unmittelbar auf den Filterscheiben angeordneten Abstandsnocken realisiert.

Im folgenden wird anhand einer Ausführungsform die erfindungsgemäße Filtervorrichtung näher erläutert.
Es zeigen in prinzipieller und nicht maßstäblicher Darstellung die
- Fig.1: einen Längsschnitt durch eine Filterscheibe;
- Fig.2: eine Draufsicht auf eine aus einem Lochblech gebildete Filterscheibenhälfte,
- Fig.3 und 4: vergrößerte Darstellungen der in Fig.1 mit "X" bzw. "Y" bezeichneten Bildausschnitte.

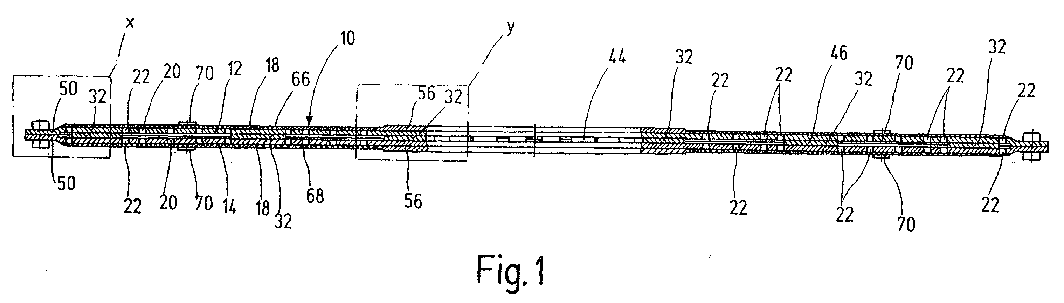

In der Fig.1 ist im Längsschnitt eine als Ganzes mit 10 bezeichnete Filterscheibe dargestellt. Die Filterscheibe 10 weist zwei miteinander verbindbare Filterscheibenhälften 12,14 auf, die zwischen sich einen im wesentlichen frei durchströmbaren zylindrischen Hohlraum 16 begrenzen und die nach außen hin jeweils mit einem Filtergewebematerial 18 mit vorgebbarer Maschen- oder Porengröße versehen sind.

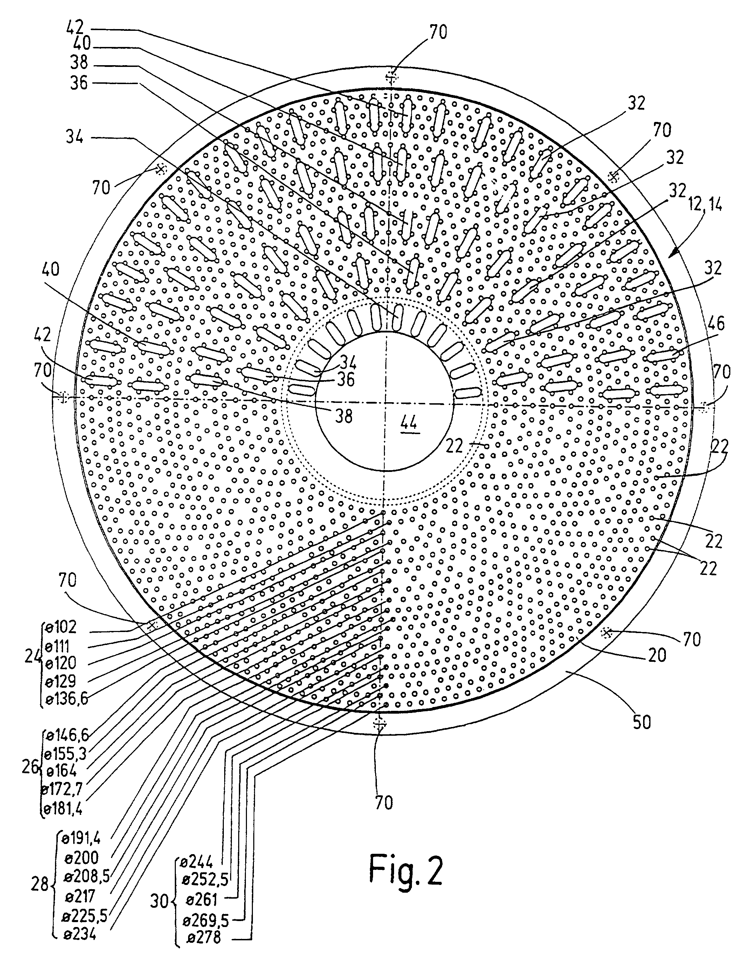

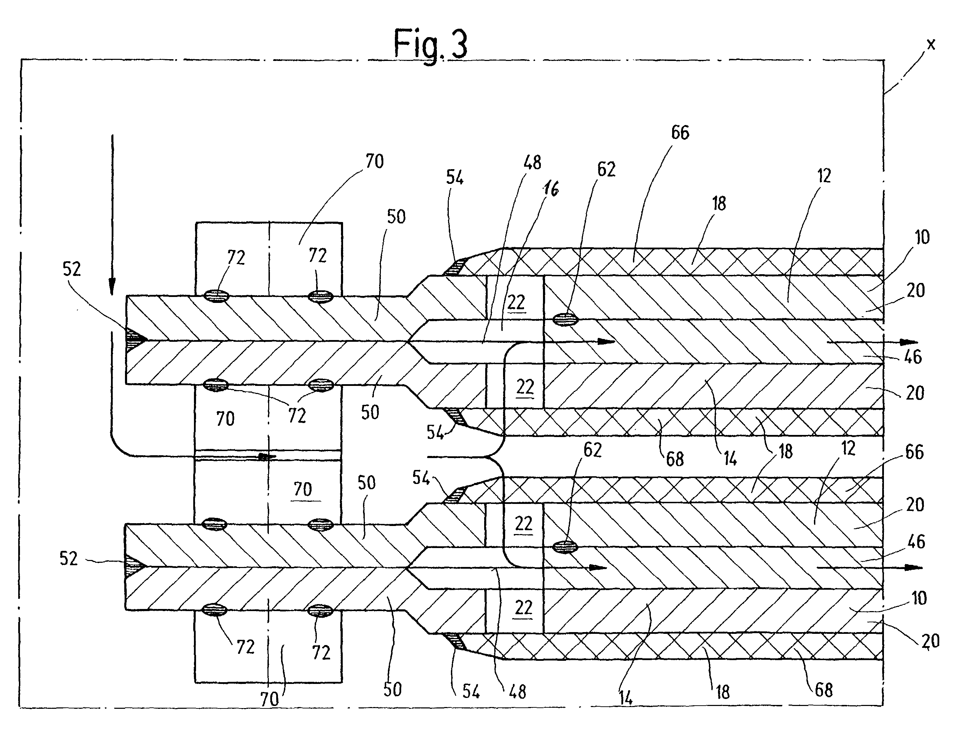

Wie insbesondere die Fig.2 zeigt, ist die jeweilige Filterscheibenhälfte 12,14 aus einer gleich aufgebauten Lochblechscheibe 20, vorzugsweise aus Edelstahl, gebildet. Die jeweilige Lochblechscheibe 20 weist eine Vielzahl von Durchlässen 22 auf, durch die das schmelzartige Fluid, insbesondere die Polymerschmelze, strömen kann. Die Durchlässe 22, insbesondere in Form kreisrunder Öffnungen, können mit unterschiedlichen Querschnittsweiten gemäß der Darstellung nach der Fig.3 zu einzelnen radialen Gruppen 24,26,28 und 30 zusammengefaßt die Blechscheibe 20 ausbilden. Die einzelnen Gruppen 24,26,28,30 von Durchlässen 22 weisen also eine unterschiedliche Häufigkeit von Durchlässen 22 auf und orientieren sich entlang von konzentrischen Kreisen um die vertikal orientierte Längsmitte der Filterscheibe 10. So weist die zuinnerst liegende Gruppe 24 64 Durchlässe 22 auf in hintereinanderfolgenden fünf konzentrischen Kreisen und ebenso die darauffolgende Gruppe 26 88 Durchlässe 22, die Gruppe 28 120 Durchlässe 22 und die Gruppe 30 abschließend 160 Durchlässe 22.

Des weiteren verlaufen auf der Innenseite der Lochblechscheibe 20 nach der Fig.2 ebenfalls zu Gruppen 34,36,38,40,42 zusammengefaßt entlang von definierten konzentrischen Kreisbögen von innen nach außen betrachtet vorstehende Rippen oder stegartige Stütznocken 32, wobei die in Blickrichtung auf die Fig.2 gesehen innerste Gruppe 34 12 Stütznocken 32, die darauffolgende Gruppe 36 10 Stütznocken 32, die nachfolgende Gruppe 38 16, die hierauf folgende Gruppe 40 20 und die abschließend letzte Gruppe 42 24 Stütznocken 32 aufweist. Des weiteren begrenzt die jeweilige Filterscheibenhälfte 12,14 in Form der Lochscheibe 20 nach innen hin einen kreisförmigen Auslaßraum 44. Die angesprochenen Stütznocken 32 sind dabei Teil einer Stützeinrichtung 46, die die Filterscheibenhälften 12,14 auf einen definierten Abstand druckstabil hält. Der Auslaßraum 44 selbst stellt eine kreisrunde Auslaßöffnung dar, über die das schmelzartige filtrierte Fluid aus der Filtervorrichtung abgeführt wird.

Die beiden Filterscheibenhälften 12,14 einer Filterscheibe 10 sind auf ihren einander zugewandten Seiten jeweils mit Stütznocken 32 gleicher Höhe und gleicher Abmessung versehen. Dabei können die Stütznocken 32 bei einer nicht näher dargestellten Ausführungsform entlang der Längstrennlinie 48 (Fig.1) aneinanderstoßen oder, wie in der Ausführungsform nach den Fig.1 und 2 dargestellt, in verschiedenen Plattenhälften angeordnet sein, wobei dann die Stütznocken 32 nach dem Übereinanderlegen der Filterscheibenhälften 12,14 in den jeweils freien Hohlraum sich erstrecken, die von der jeweils anderen Filterscheibenhälfte 14 bzw. 12 nur flächig begrenzt ist. Bei einer anderen nicht dargestellten Ausführungsform kann die Verteilung der Stütznocken 32 für die Filterscheibenhälften 12,14 auch derart gewählt werden, daß sie alternierend nach einem vorgebbaren Muster in jeweils hergestellte Zwischenräume zwischen den Stütznocken 32 der anderen Filterscheibenhälfte 14 bzw. 12 eingreifen. Eine besonders kostengünstige Art der Herstellung ist jedoch, wenn man die Stütznockenanordnung 32 derart wählt, wie sie für die beiden Filterscheibenhälften 12,14 in der Fig.2 dargestellt ist. Die dann miteinander identischen Filterscheibenhälften 12,14 brauchen dann nur um die Längsmitteltrennlinie 48 der Filterscheibe 10 geschwenkt und übereinandergelegt zu werden, um zu dem Scheibenpaket nach der Fig.1 zu gelangen. An dieser Stelle sei auch ergänzend noch darauf hingewiesen, daß die Filterscheiben 10 in der Fachsprache mit "Disk" oder "Filterdisk" bezeichnet sind.

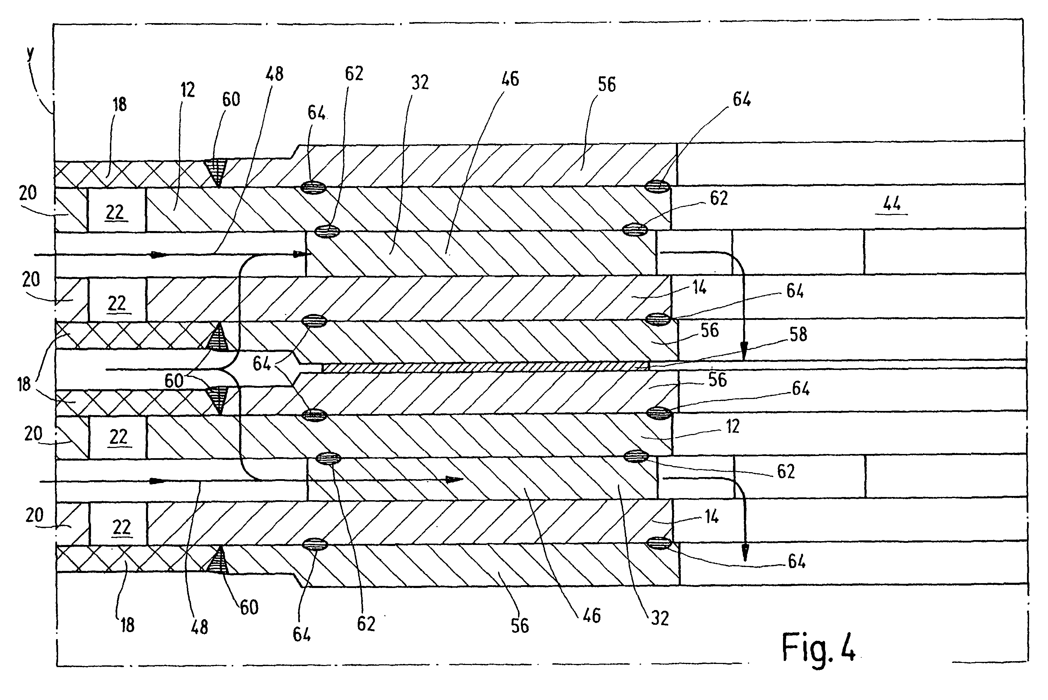

Wie die Fig.1 und 3 des weiteren zeigen, mündet die jeweilige Lochblechscheibe 20 außenumfangsseitig in einen Stützring 50, der gegenüber der Längsmittelebene der Lochscheibe 20 abgesetzt ist und an der Längstrennlinie 48 der Filterscheibe 10 endet. Wie insbesondere die vergrößerte Bilddarstellung nach der Fig.3 zeigt, werden die einander benachbart gegenüberliegenden Stützringe 50 einer Filterscheibe 10 aufeinandergelegt und außenumfangsseitig über eine Rundschweißnaht 52 fest miteinander verbunden. Ebenso werden über eine Ringschweißnaht 54 die Filtergewebematerialscheiben 18 außenumfangsseitig mit dem außenumfangsseitigen Randbereich der jeweiligen Lochblechscheibe 20 fest verbunden. Mögliche Fluidströmungsrichtungen sind in den Darstellungen nach den Fig.3 und 4 mit Pfeilen wiedergegeben. Das zu filtrierende schmelzartige Medium oder Fluid, insbesondere in Form der Polymerschmelze, tritt unter hohem Druck (mehrere 100 bar) von außen nach innen durch das Filtergewebematerial 18 und wird über die Durchlässe 22 in den Lochblechscheiben 20 in den jeweils derart begrenzten freien Hohlraum 16 weiter abgeleitet. Da bis auf die Stütznocken 32 kein Durchflußwiderstand im jeweiligen Hohlraum 16 vorgesehen ist, ist der Strömungswiderstand insgesamt verringert, die Durchtrittsgeschwindigkeit des Mediums durch die Filtervorrichtung erhöht und mithin auch die Filtrationsleistung.

Die in Fig.4 gezeigte und mit "Y" bezeichnete Bildausschnittsvergrößerung nach der Fig.1 zeigt wiederum mit Pfeilen die mögliche Durchströmungsrichtung der Filterscheibe 10 zur Auslaßöffnung 44 hin. Der jeweilige Auslaßraum oder die jeweilige Auslaßöffnung 44 im Inneren einer jeden Filterscheibe 10 ist von einem inneren Stützring 56 einer jeden Filterscheibenhälfte 12,14 begrenzt, wobei die Scheibenstärke in diesem Bereich im wesentlichen gleich gehalten ist. Die einander benachbart gegenüberliegenden inneren Stützringe 56 einer jeden Filterscheibe 10 sind über eine Abstandsscheibe 58, insbesondere in Form einer Fließdichtung, auf einen vorgebbaren Abstand zueinander gehalten. Des weiteren ist diesmal über eine Innenschweißnaht 60 das jeweilige Filtergewebematerial 18 mit dem zugeordneten inneren Stützring 56 fest verbunden. Insbesondere bildet der nach außen weisende Teil des inneren Stützringes 56 eine Anlagefläche für den inneren Rand des abzustützenden Filtergewebematerials 18.

Die einzelnen Stütznocken 32 sind über mittels eines Buckelschweißverfahrens hergestellte Schweißpunkte 62 mit der jeweiligen Filterscheibenhälfte 12 und/oder 14 fest verbunden. Über weitere, durch ein Buckelschweißverfahren hergestellte Schweißpunkte 64 sind darüber hinaus die der Auslaßöffnung 44 zugewandten Innenseiten der Lochblechscheiben 20 mit den bereits angesprochenen inneren Stützringen 56 fest verschweißt. Auf der jeweiligen Oberseite 66 und der Unterseite 68 einer jeden Filterscheibe 10 sind darüber hinaus Abstandsnocken 70 in gleichmäßigen, radialen Abständen voneinander diametral außenumfangsseitig an der Filterscheibe 10 angeordnet, wobei diese ebenfalls über Buckelschweißpunkte 72 festgelegt sind und die Funktion eines Spacers für die einzelnen Filterscheiben 10 übernehmen. Dahingehende Abstandsnocken 70 können, wie dies auch die Fig.1 zeigt, über die Filterscheibenoberflächen verteilt, insbesondere im mittleren Bereich angeordnet sein.

Mehrere Filterscheiben 10 übereinander angeordnet ergeben dann die komplette, in einem Gehäuse bevorratbare Filtervorrichtung (nicht dargestellt). Mit der jeweiligen Filterscheibe 10 ist ein bedeutend geringerer Druck zur Überwindung des inneren Widerstandes erforderlich und zusätzlich sind die Fertigungskosten durch den vereinfachten Aufbau erheblich verringert. Dadurch, daß die einzelnen Stütznocken 32 an ihren freien Enden in einen kreisbogenartigen Abschluß enden, ist das Anströmverhalten für das zu filtrierende, schmelzartige Fluid verbessert. Da ferner die jeweilige Stütznocke 32 durch Sechsergruppen von kreisrunden Durchlässen 22 begrenzt ist, werden die Durchlässe 22 nicht überdeckt und stehen für das Eintreten des Mediums vollständig zur Verfügung.

## Patentansprüche

1. Filtervorrichtung, insbesondere zum Filtrieren von schmelzartigen Fluiden, wie Polymerschmelzen, mit mindestens einer Filterscheibe (10), die zwei randseitig miteinander verbundene Filterscheibenhälften (12,14) aufweist, die nach außen hin mit einem Filtergewebematerial (18) versehen sind, die über eine Stützeinrichtung (46) auf Abstand voneinander gehalten sind, und die zwischen sich einen im wesentlichen frei durchströmbaren Hohlraum (16) begrenzen und nach innen hin eine Auslaßöffnung (44) für das schmelzartige filtrierte Fluid begrenzen, **dadurch gekennzeichnet, daß** die Stützeinrichtung (46) einzelne Stütznocken (32) mit im wesentlichen gleichen Außenabmessungen aufweist, die in mehreren Gruppen (34,36,38,40,42) geordnet und voneinander getrennt sich radial von der Auslaßöffnung (44) nach außen hin erstrecken und die mit mindestens einer der beiden Filterscheibenhälften (12,14) fest verbunden sind und den Hohlraum (16) derart durchgreifen, daß sie in Anlage mit der jeweils anderen Filterscheibenhälfte (14,12) sind.

2. Filtervorrichtung nach Anspruch 1, **dadurch gekennzeichnet, daß** die einzelnen Gruppen (34,36,38,40,42) von Stütznocken (32) sich in verschiedenen radialen Abständen von der Auslaßöffnung (44) entlang von konzentrischen Kreisen um diese gruppieren.

3. Filtervorrichtung nach Anspruch 1 oder 2, **dadurch gekennzeichnet, daß** beide Filterscheibenhälften (12,14) einer Filterscheibe (10) auf ihren einander zugewandten Seiten jeweils mit Stütznocken (32) gleicher Höhe versehen sind, die entweder entlang einer Längstrennlinie (48) der Filterscheibenhälften (12,14) aneinanderstoßen und/oder unter Anlage mit der jeweils anderen Filterscheibenhälfte (14,12) in die freien Abstände zwischen den Stütznocken (32) dieser Filterscheibenhälften (12,14) eingreifen.

4. Filtervorrichtung nach einem der Ansprüche 1 bis 3, **dadurch gekennzeichnet, daß** beide Filterscheibenhälften (12,14) einer Filterscheibe (10) mit ihren Stütznocken (32) miteinander identisch sind.

5. Filtervorrichtung nach einem der Ansprüche 1 bis 4, **dadurch gekennzeichnet, daß** die Stütznocken (32) über mittels eines Buckelschweißverfahrens hergestellte Schweißpunkte (62) mit der jeweiligen Filterscheibenhälfte (12,14) fest verbunden sind.

6. Filtervorrichtung nach einem der Ansprüche 1 bis 5, **dadurch gekennzeichnet, daß** die beiden Filterscheibenhälften (12,14) parallel zueinander verlaufend angeordnet sind und einen scheibenartigen Hohlraum (16) gleicher Höhe begrenzen.

7. Filtervorrichtung nach einem der Ansprüche 1 bis 6, **dadurch gekennzeichnet, daß** die Stütznocken (32) stegartige massive Kastenprofile ausbilden, die auf die jeweilige Filterscheibenhälfte (12,14) derart aufsetzbar sind, daß sie die Durchlässe (22) in der Filterscheibenhälfte (12,14) freilassen.

8. Filtervorrichtung nach Anspruch 7, **dadurch gekennzeichnet, daß** die jeweiligen Durchlässe (22) in den Filterscheibenhälften (12,14) aus kreisrunden Ausnehmungen gebildet sind, die in Gruppen (24,26,28,30) unterschiedlicher Häufigkeit sich entlang von konzentrischen Kreisen um die Auslaßöffnung (44) erstrecken.

9. Filtervorrichtung nach einem der Ansprüche 1 bis 8, **dadurch gekennzeichnet, daß** die Filterscheibenhälften (12,14) und die Stütznocken (32) aus Edelstahl gebildet sind.

10. Filtervorrichtung nach einem der Ansprüche 1 bis 9, **dadurch gekennzeichnet, daß** auf der Oberseite (66) und der Unterseite (68) der Filterscheibe (10) Abstandsnocken (70) angeordnet sind, insbesondere im außenumfangsseitigen Randbereich, wo die Filterscheibenhälften (12,14) über eine Randschweißnaht (52) miteinander verbunden sind.

## Claims

1. A filter device, in particular for filtering melt-type fluids such as polymer melts, comprising at least one filter disk (10) having two filter disk halves (12, 14) connected to each other by their edges and outwardly fitted with a filter tissue (18), the filter disk halves being held apart by a supporting device (46) delimiting between them a hollow space (16) through which a fluid can flow substantially freely and delimiting inwardly an outflow opening (44) for the filtered melt-type fluid, **characterised in that** the supporting device (46) has individual supporting cams (32) of substantially equal outer dimensions, arranged in several groups (34, 36, 38, 40, 42), separately and extending radially outwards from the outflow opening, rigidly connected to at least one of the two halves (12, 14) and traversing the hollow space (16) in such a way as to rest against the respective other disk half (14. 12).

2. A filter device according to Claim 1, **characterised in that** the individual groups (34, 36, 38, 40, 42) of supporting cams (32) are arranged at various radial distances from the outflow opening (44) and along concentric circles around it.

3. A filter device according to Claim 1 or 2, **characterised in that** both filter disk halves (12, 14) of a filter disk (10) have a supporting cam (32) each of the same height, either abutting against each other along the longitudinal separating line (48) of the filter disk halves (12, 14) and/or engaging into the free spaces between the supporting cams (32) of these filter disk halves (12, 14) while resting against the respective other filter disk half (14, 12).

4. A filter device according to one of the Claims 1 to 3, **characterised in that** both filter disk halves (12, 14) of a filter disk (10) with their supporting cams (32) are identical to each other.

5. A filter device according to one of the Claims 1 to 4, **characterised in that** the supporting cams (32) produced by projection welding are rigidly connected to the respective filter disk half (12, 14) by spot welds (62) produced by projection welding.

6. A filter device according to one of the Claims 1 to 5, **characterised in that** the two filter disk halves (12, 14) extend parallel to each other and delimit a disk-like hollow space (16) of the same height.

7. A filter device according to one of the Claims 1 to 6, **characterised in that** the supporting cams (32) form solid bar-like box sections which can be placed on the respective filter disk halves (12, 14) in such a way that they leave the passages (22) in the filter disk half (12, 14) open.

8. A filter device according to Claim 7, **characterised in that** the respective passages (22) in the filter disk halves (12, 14) are formed by circular holes in different numbers and variously spaced in groups (24, 26, 28, 30), extending along concentric circles around the outflow opening (44).

9. A filter device according to one of the Claims 1 to 9, **characterised in that** the filter disk halves (12, 14) and the supporting cams (32) are of stainless steel.

10. A filter device according to one of the Claims 1 to 9, **characterised in that** distance cams (70) are arranged on top (66) and the bottom (68) of the filter disk (10), particularly in the circumferential outside area, where the filter disk halves (12,14) are connected together by an edge weld (52).

## Revendications

1. Dispositif de filtration, en particulier pour la filtration de fluides en état fondu, tels que des fontes de polymères, avec au moins un disque de filtration (10) comprenant deux moitiés de disque de filtration (12,14) reliés entre eux sur les bords, qui sont équipés vers l'extérieur d'un tissu de filtration (18), qui sont maintenus avec un espacement entre elles par un dispositif d'appui (46) et qui délimitent sensiblement entre elles une cavité creuse (16) pouvant être traversée librement par un flux en formant vers l'intérieur une ouverture de sortie (44) pour le fluide en état fondu qui a été filtré, **caractérisé en ce que** le dispositif d'appui (46) comprend différentes cames d'appui (32) ayant sensiblement les mêmes dimensions extérieures, qui s'étendent en direction radiale à partir de l'ouverture de sortie (44) vers l'extérieur en étant ordonnées en plusieurs groupes (34,36,38,40,42) et séparées les unes des autres et qui sont reliées fermement avec au moins une des deux moitiés de disque de filtration (12,14) en traversant la cavité creuse (16) de telle manière qu'elles soient en contact avec l'autre moitié respective de disque de filtration (14,12).

2. Dispositif de filtration selon la revendication 1, **caractérisé en ce que** les différents groupes (34,36,38,40,42) de cames d'appui (32) sont rassemblés le long de cercles concentriques en différents espaces radiaux par rapport à l'ouverture de sortie (44) et autour de celle-ci.

3. Dispositif de filtration selon la revendication 1 ou 2, **caractérisé en ce que** sur leurs côtés dirigés l'un vers l'autre les deux moitiés de disque de filtration (12,14) d'un disque de filtration (10) sont munies respectivement de cames d'appui (32) de même hauteur qui soit se touchent le long d'une ligne longitudinale de séparation (48) des moitiés de disque de filtration (12,14) et/ou qui pénètrent dans les espaces libres entre les cames d'appui (32) de ces moitiés de disque de filtration (12,14) en s'appuyant sur l'autre moitié de disque de filtration respective (14,12).

4. Dispositif de filtration selon l'une des revendications 1 à 3, **caractérisé en ce que** les deux moitiés de disque de filtration (12,14) d'un disque de filtration (10) avec leurs cames d'appui (32) sont identiques l'une par rapport à l'autre.

5. Dispositif de filtration selon l'une des revendications 1 à 4, **caractérisé en ce que** les cames d'appui (32) sont reliées fermement avec la moitié de disque de filtration (12,14) respective au moyen de points de soudure (62) réalisés avec un procédé de soudure par bossages.

6. Dispositif de filtration selon l'une des revendications 1 à 5, **caractérisé en ce que** les deux moitiés de disque de filtration (12,14) sont disposées parallèlement l'une par rapport à l'autre et délimitent une cavité creuse en forme de disque (16) de même hauteur.

7. Dispositif de filtration selon l'une des revendications 1 à 6, **caractérisé en ce que** les cames d'appui (32) constituent des profils en caisson massifs ayant la forme de nervures qui peuvent être posés sur la moitié de disque de filtration (12,14) respective de façon à libérer les passages (22) dans la moitié de disque de filtration (12, 14).

8. Dispositif de filtration selon la revendication 7, **caractérisé en ce que** les passages respectifs (22) dans les moitiés de disque de filtration (12,14) sont formés d'évidements circulaires qui s'étendent en groupes (24,26,28,30) de densités différentes le long de cercles concentriques autour de l'ouverture de sortie (44).

9. Dispositif de filtration selon l'une des revendications 1 à 8, **caractérisé en ce que** les moitiés de disque de filtration (12,14) et les cames d'appui (32) sont réalisées en acier spécial.

10. Dispositif de filtration selon l'une des revendications 1 à 9, **caractérisé en ce que** des cames d'espacement (70) sont disposées sur le côté supérieur (66) et sur le côté inférieur (68) du disque de filtration (10), et ceci en particulier dans la zone de la bordure périphérique extérieure où les moitiés de disque de filtration (12,14) sont reliées entre elles par un cordon de soudure en périphérie (52).
